# EUROPÄISCHE PATENTSCHRIFT

(11) **EP 2 402 174 B1**
(45) Veröffentlichungstag und Bekanntmachung des Hinweises auf die Patenterteilung: **17.04.2013**
(21) Anmeldenummer: 10006779.2
(22) Anmeldetag: 30.06.2010
(51) Int. Cl.: B44C 5/04, B27K 3/00, E04F 15/02, E04F 15/04, B05D 3/12, B05D 7/06

(54) **Verfahren zum Herstellen grundierter Paneele aus Holzwerkstoff**
Method for producing primed panels made of wooden material
Procédé de fabrication de panneaux enduits en matière dérivée du bois

(43) Veröffentlichungstag der Anmeldung: 04.01.2012
(60) Teilanmeldung: 13000439.3
(73) Patentinhaber: Flooring Technologies Ltd., Pieta PTA 9044 (MT)
(72) Erfinder:
(74) Vertreter: Rehmann, Thorsten

(56) Entgegenhaltungen:
- EP-A1- 1 859 912
- EP-A2- 1 454 763
- EP-A2- 1 512 468
- WO-A1-03/089736
- WO-A2-2010/055429
- DE-A1-102004 009 160
- DE-A1-102008 008 240

## Beschreibung

Die Erfindung betrifft ein Verfahren zum Herstellen grundierter Paneele.

Laminatpaneele sind bereits seit geraumer Zeit Stand der Technik und heute in vielfältigen Anwendungen, insbesondere als Ersatz für Echtholzpaneele, nicht mehr weg zu denken. Ein besonders großes Anwendungsgebiet besteht in der Verkleidung von Wänden, Decken und Fußböden, wo aus entsprechenden Wand-, Decken- und Fußbodenpaneelen die jeweilige Verkleidung zusammengesetzt wird. Natürlich werden in verschiedenen Anwendungsgebieten verschiedene Anforderungen an die Oberflächenbeschaffenheit derartiger Laminatpaneele gestellt. Ein Fußbodenpaneel ist dabei naturgemäß wesentlich größeren Belastungen ausgesetzt als beispielsweise eine Wand- oder Deckenverkleidung.

Die großtechnische Fertigung von Laminatpaneelen umfasst dabei eine ganze Reihe von Fertigungsschritten, die für die verschiedenen Paneelsorten weitgehend gleich sind. Es wird zunächst eine Trägerplatte, beispielsweise aus einem Holzwerkstoff wie MDF, HDF oder OSB, bereitgestellt und diese mit mehreren Schichten gegebenenfalls unterschiedlicher Materialien beschichtet. Auf eine gegebenenfalls vorbehandelte Oberfläche einer Holzwerkstoffplatte, die als Kern des herzustellenden Paneels bereitgestellt wurde, wird eine Dekorschicht aufgebracht. Dies kann beispielsweise in Form eines bedruckten imprägnierten Papiers geschehen. Das Papier kann auch unmittelbar auf die Oberseite der Holzwerkstoffplatte aufgedruckt werden. Dies kann mittels Druckwalzen oder einem Digitaldrucker geschehen. Bevor das Dekor aufgedruckt wird, kann gegebenenfalls auch eine Grundierungsschicht auf die Oberfläche der Holzwerkstoffplatte aufgebracht werden. Dieses Dekor muss, insbesondere sofern das Paneel als Fußbodenpaneel verwendet werden soll, von mindestens einer Nutzschicht abgedeckt werden. Diese kann beispielsweise aus einem Lack oder einem Kunstharz bestehen. Vorteilhafterweise sind abriebfeste Partikel (z.B. Korund) beigemischt, die die Oberfläche des fertigen Paneels widerstandsfähiger gegen die Belastung durch Begehen machen. Der Schichtaufbau mit gegebenenfalls mehreren Kunstharzschichten wird abschließend in einer Presse unter Druck- und Temperatureinfluss verpresst, wie in der EP 1 454 763 B1-auf die vollumfänglich Bezug genommen wird- offenbart. Anschließend wird die immer noch großformatige nun beschichtete Holzwerkstoffplatte in einzelne Paneele aufgeteilt. Nach der Aufteilung in einzelne Paneele werden an den Seitenflächen Verbindungsmittel in Form einer Feder und einer Nut mit integrierten Verriegelungsmitteln angebracht, sodass zwei Paneele mittels einer sogenannten "Klick-Verbindung" miteinander verbunden und zueinander in vertikaler und horizontaler Richtung verriegelt werden können. Um den realistischen Eindruck eines Laminatpaneels zu erhöhen, ist es bekannt, beim Verpressen des Schichtaufbaus in die Oberseite eine zu dem Dekor korrespondierende Struktur (embossed-in-register) einzuprägen. Das Laminatpaneel wird dadurch nicht nur optisch sondern auch haptisch beispielsweise einem Echtholz-Paneel weiter angeglichen.

Alternativ kann die Beschichtung auch mit Lackschichten erfolgen, die anschließend durch den Einsatz hochenergetischer Strahlungen, beispielsweise Elektronen- und UV-Strahlung, ausgehärtet wird. Auch in diesem Fall wird die großformatige beschichtete Trägerplatte erst nach dem vollständigen Aushärten der aufgetragenen Schichten in Paneele aufgeteilt.

Auf dem Markt der Laminatpaneele, insbesondere der Fußbodenpaneele, ist eine Nachfrage nach immer mehr verschiedenen Dekorvarianten zu beobachten. Dabei werden nicht nur immer neue Holznachbildungen nachgefragt, sondern auch zunehmend Fliesen- und Steindekore sowie Fantasiedekore in verschiedenster Form. Das Umrüsten einer großtechnischen Fertigungsanlage für Laminatpaneele auf ein neues Dekor ist jedoch relativ umständlich, zeitintensiv und daher kostenaufwändig. Zudem müssen beispielsweise für den Fall, dass das Dekor in Form eines bedruckten Dekorpapiers auf den Holzwerkstoffkern aufgelegt wird, Dekorpapiere mit verschiedenen Dekoren bevorratet werden. Dies benötigt viel Lagerplatz und bindet zudem durch die große Menge vorzuhaltender Dekorpapiere unnötig viel Kapital.

Wird das Dekor beispielsweise über Druckwalzen direkt auf die Holzwerkstoffplatte aufgedruckt, muss für jedes Dekor ein eigener Satz Walzen vorgehalten werden, die insbesondere in der Anschaffung kostenintensiv sind. Wenn eine Struktur in die Oberseite eingeprägt werden soll, müssen zusätzlich die Pressplatten oder Pressbleche kostenaufwendig graviert werden. Zudem beansprucht das Auswechseln derartiger Pressplatten oder Pressbleche Zeit, in der die Produktionsanlage steht, wodurch die Herstellungskosten für Laminatpaneele steigen.

Aus den vorgenannten Gründen ist es nur wirtschaftlich sinnvoll, relativ große Stückzahlen von Laminatpaneelen mit einem einmal gewählten Dekor herzustellen, bevor Paneele mit einem anderen Dekor produziert werden.

Neben der Nachfrage nach immer mehr verschiedenen Dekorvarianten ist jedoch auch eine zunehmende Verkleinerung der nachgefragten Auftragsgrößen zu beobachten. Werden jedoch zu kleine Mengen von Laminatpaneelen mit einem bestimmten Dekor nachgefragt, können diese nicht wirtschaftlich produziert werden. Es müssen folglich einzelne Aufträge beim Handel oder Großhändler "gesammelt werden", wodurch sich für den Endkunden lange Lieferzeiten ergeben, die dieser -insbesondere im do it yourself-Bereich- nicht akzeptiert. Ein Teil der Nachfrage muss folglich unbefriedigt bleiben.

Aus der WO 2010/055429 A2 ist ein Verfahren zum Herstellen eines Paneels bekannt, bei dem auf die Oberseite einer großformatigen Holzwerkstoffplatte zunächst eine Grundierung aufgebracht wird. Die so grundierte Holzwerkstoffplatte wird gegebenenfalls verpresst und anschließend in einzelne Paneele aufgeteilt. Erst danach werden die einzelnen Paneele mit dem gewünschten Dekor bedruckt.

Nachteilig ist, dass obwohl durch das in der genannten Druckschrift beschriebene Verfahren die Fertigungsanlage selbst kleiner und kompakter ausgebildet sein kann, da nicht mehr die großformatigen Holzwerkstoffplatten, sondern kleinere Paneele bedruckt werden müssen, in der Regel keine schnelleren Lieferzeiten kleiner Losgrößen mit individuellen Dekoren erreicht werden. Bestellt ein Kunde eine kleine Menge Paneele mit einem gewünschten Dekor beispielsweise bei einem Paneelhändler, wird dieser die eingehenden Bestellungen sammeln, bis er insgesamt eine ausreichende Anzahl von Paneelen beim Paneelhersteller bestellt. Dies ist notwendig, um die Transportkosten in vertretbare Grenzen zu halten, da Laminatpaneele beispielsweise mit großen Lastkraftwagen transportiert werden, die, um wirtschaftlich arbeiten zu können, bis zu einem gewissen Grade ausgelastet sein müssen. Durch das in der WO 2010/055429 A2 beschriebene Verfahren kann zwar die Wirtschaftlichkeit des Herstellungsverfahrens durch die Verwendung kleinerer Anlagen gesteigert werden, eine Flexibilisierung insbesondere was die schnelle Lieferung kleiner und kleinster Losgrößen mit individuellen Dekoren angeht, wird jedoch nicht erreicht.

Das erfindungsgemäß zu lösende Problem besteht also darin, dass es bei der derzeitigen Art und Weise, wie die vom Endkunden gewünschten Laminatpaneele hergestellt werden, aus wirtschaftlichen Gründen nicht möglich ist, in vertretbarer Lieferzeit auch ausgefallene Kundenwünsche zu befriedigen, sofern nicht eine Mindestlosgröße gefordert wird, und dass auch dann, wenn die Mindestlosgröße erreicht sein sollte (beispielsweise im Objektbereich, also der Ausstattung großer Büros oder Hotels) eine längere Lieferzeit in Kauf genommen werden muss, weil natürlich die Anlage beim Paneelhersteller erst entsprechend umgerüstet werden muss, was selbst bei schlechtester Auftragslage nicht innerhalb weniger Stunden oder Tage möglich ist.

Dieses Problem kann dadurch gelöst werden, dass die Kette des Herstellungsprozesses unterbrochen wird und der Händler, der den Dekorwunsch des Endkunden entgegennimmt, das Dekor selbst auf die Paneele aufbringen kann. Der Händler kann aber keine Holzwerkstoffplatten in Abmaßen von mehreren Metern handhaben und aufteilen.

Der Erfindung liegt daher die Aufgabe zugrunde, ein Verfahren vorzuschlagen, mit dem die Möglichkeit geschaffen wird, dass ein Händler, dem Roh-Paneele zur Verfügung gestellt werden, diese anschließend dem Kundenwunsch entsprechend mit einem Dekor versehen kann, damit auch kleinste Auftragsgrößen flexibel und wirtschaftlich herstellbar sind und gleichzeitig die Lager- und Materialkosten reduziert werden.

Die Erfindung löst die gestellte Aufgabe durch ein Verfahren zum Herstellen verpackter grundierter Paneele als Halbzeuge mit den Schritten:
a) Bereitstellen einer Holzwerkstoffplatte,
b) Aufbringen einer Grundierung in Form einer Kunstharzschicht auf wenigstens eine Oberseite der Holzwerkstoffplatte,
c) Aufbringen einer Beschichtung auf eine der Oberseite der Holzwerkstoffplatte gegenüberliegende Unterseite der Holzwerkstoffplatte,
d) Verpressen des Schichtaufbaus aus Holzwerkstoffplatte, Grundierung und Beschichtung unter Druck- und gegebenenfalls Temperatureinfluss,
e) Aufteilen der Holzwerkstoffplatte in einzelne Paneele,
f) transportsicheres Verpacken der grundierten Paneele.

Durch dieses Verfahren wird ein Halbzeug geschaffen, das für sich allein betrachtet noch nicht verkehrsfähig ist. Der Händler kann aber seinem Bedarf entsprechend Halbzeuge einkaufen und diese bei sich lagern. Die grundierten Roh-Paneele sind vom Hersteller bereits so produziert worden, dass sie ihre Funktion in technischer Hinsicht erfüllen. Sie sind also geeignet, durch die Verbindungs- und Verriegelungsmittel miteinander verbunden und als Wand-, Decken- oder Fußbodenpaneele verwendet zu werden. Da jedoch eine Nutzschicht auf der Oberfläche der Paneele fehlt, sind die Paneele den Beanspruchungen, insbesondere bei der Verwendung als Fußbodenpaneel, weitestgehend schutzlos ausgesetzt. Sie weisen zudem noch kein Dekor auf. Die grundierten Roh-Paneele, die auch das beschriebene Verfahren geschaffen werden, unterscheiden sich von fertigen Paneelen lediglich durch die fehlende Dekorschicht und die fehlende wenigstens eine Nutzschicht. Der Endkunde kann sich beim Händler ein Dekor und eine Farbe für die Paneele aussuchen, und dieser bedruckt die einzelnen fertig vorkonfektionierten Paneele und versiegelt das Dekor. Dadurch kann äußerst flexibel auf Kundenwünsche reagiert werden, weil das Dekor sowohl von der Maserung (Holzdekor) als auch von seiner Farbe beliebig kombinierbar ist. Der Hersteller des Halbzeuges kann wirtschaftlich produzieren, weil nur eine Art Paneele hergestellt wird, die anschließend an die verschiedenen Händler ausgeliefert und dort gelagert werden. Der Händler kann seinen Lagerbestand an Paneelen reduzieren, weil er ja unmittelbar jeden Wunsch des Kunden erfüllen kann.

Die Grundierung kann dabei in Form eines harzgetränkten Papiers aufgebracht werden oder ein direkt auf die Oberseite aufgebrachtes Kunstharz sein. Alternativ kann die Grundierung auch in Form einer Folie, die insbesondere mit einem Kunstharz beschichtet ist, auf die Oberseite der Holzwerkstoffplatte aufgeklebt werden. Dabei kann auch ein kunstharzhaltiger Klebstoff verwendet werden.

Während des Verpressens des Schichtaufbaus wird vorteilhafterweise eine Struktur in die Grundierung eingeprägt.

Es hat sich als besonders vorteilhaft herausgestellt, wenn nach dem spanabhebenden Bearbeiten eine Qualitätsüberprüfung durchgeführt wird.

Um die Bedruckbarkeit der Oberfläche des herzustellenden grundierten Paneels zu erhöhen, ist die Grundierung vorteilhafterweise eingefärbt. Um die Haftung der später aufzubringenden Farbe auf der Grundierung zu verbessern kann auch auf die Grundierung ein Primer aufgebracht werden.

Vorteilhafterweise werden Verbindungs- und Verriegelungsmittel aus dem Paneel herausgefräst. Vor dem transportsicheren Verpacken werden die Paneele vorzugsweise gereinigt.

Ein nach dem Verfahren hergestelltes Paneel weist einen Kern aus einer Holzwerkstoffplatte auf, auf dessen Oberseite ausschließlich eine Grundierung in Form einer Kunstharzschicht und gegebenenfalls ein Primer aufgebracht ist, die mit dem Kern verpresst sind, wobei an dessen Unterseite eine Beschichtung aufgebracht ist und an sich gegenüberliegenden Seitenflächen des Paneels zueinander korrespondierende Verbindungs- und Verriegelungseinrichtungen vorgesehen sind.

Dabei kann die Rauigkeit einer Oberseite des Paneels kleiner als 20 µm, besonders bevorzugt kleiner als 10 µm, sein. Als Prüfnorm für die Oberflächenrauigkeit wird überwiegend die ISO 4287-1 verwendet. Um eine besonders gute Bedruckbarkeit des Paneels zu gewährleisten, ist für die Farbe einer Oberseite des Paneels im CIELAB-Farbraum ein Helligkeitsparameter L größer als 92 und ein Rot-Grün-Wert A liegt zwischen -5 und +5, bevorzugt zwischen -2 und +2, und ein Gelb-Blau-Wert B liegt zwischen -15 und +15, bevorzugt zwischen -8 und +8. Als normative Basis dieses Farbraums dient die Norm DIN 6174.

Die Oberseite des Paneels kann eine Struktur aufweisen. Die Verbindungs- und Verriegelungseinrichtungen können einstückig mit der Holzwerkstoffplatte ausgebildet sein. Zueinander korrespondierende Verbindungs- und Verriegelungsmittel können an allen sich gegenüberliegenden Seitenflächen vorgesehen sein.

Der Erfindung liegt die Idee zugrunde, die Herstellung von Laminatpaneelen, insbesondere für den Einsatz als Wand-, Decken- und Bodenbeläge flexibeler, einfacher und kostengünstiger zu gestalten. Dazu ist vorgesehen, dass im Rahmen der großtechnischen Fertigung nur noch grundierte Paneele als Halbzeuge hergestellt werden. Diese weisen einen Kern aus Holzwerkstoff auf, der beispielsweise als OSB, MDF oder HDF ausgebildet sein kann. Dieser wird mit einer Grundierung beschichtet, die mit dem Kern der Holzwerkstoffplatte verpresst wird. Dadurch entsteht eine leicht bedruckbare Oberfläche, die die erforderlichen Eigenschaften aufweist, um ein exzellentes Druckbild beim späteren Bedrucken zu gewährleisten. Die Grundierung in Form einer Kunstharzschicht kann dabei in unterschiedlichsten Formen auf den Kern aus Holzwerkstoff aufgebracht werden. Denkbar ist beispielsweise das Aufbringen in Form eines harzgetränkten Papiers, als direkt auf die Oberseite aufgebrachte Kunstharzschicht oder in Form einer Finishfolie, die beispielsweise mit einem Klebstoff, der Kunstharz enthalten kann, aufkaschiert wird. Alle diese aufgetragenen Grundierungen führen zu einer besonders hohen Oberflächenqualität. In Abhängigkeit der auf die Holzwerkstoffplatte aufgebrachten Grundierung wird auf die der Oberseite der Holzwerkstoffplatte gegenüberliegende Unterseite eine Beschichtung aufgebracht. Diese kann beispielsweise die Funktion eines Gegenzugs übernehmen. Dies ist insbesondere dann nötig, wenn beim Trocknen der aufgebrachten Grundierung eine Zugkraft parallel zur Oberfläche der Holzwerkstoffplatte auf die Holzwerkstoffplatte ausgeübt wird. Durch die Auftragung einer entsprechenden Beschichtung auf die Unterseite der Holzwerkstoffplatte wird auch auf die Unterseite eine entsprechende Kraft ausgeübt, sodass eine Wölbung oder Schüsselung der Holzwerkstoffplatte wirksam verhindert wird.

Wird die Grundierung beispielsweise in Form einer beschichteten Folie aufgebracht, die bereits fertig ausgehärtet ist, kann das Aufbringen eines Gegenzuges unnötig sein. Die auf die Unterseite aufgebrachte Beschichtung kann dann beispielsweise die Auf nahme von Feuchtigkeit in die Unterseite der Holzwerkstoffplatte verhindern oder lediglich optische Gründe haben. So kann die Akzeptanz eines Paneels im Markt beim Endverbraucher insbesondere dadurch gesteigert werden, dass auch auf der im verlegten Zustand nicht mehr sichtbaren Unterseite der Paneele die als Kern fungierende Holzwerkstoffplatte nicht mehr zu sehen ist.

Nachdem die Grundierung auf die Oberseite und die Beschichtung auf die Unterseite der Holzwerkstoffplatte aufgebracht ist, wird der Schichtaufbau verpresst. Dies kann unter Druck- und Temperatureinfluss geschehen. Dies ist insbesondere dann nötig, wenn zumindest eine der aufgebrachten Schichten sich mit dem Holzwerkstoffkern verbinden soll. Wird die Grundierung in Form einer bereits fertig ausgehärteten Folie aufkaschiert, ist ein Verpressen unter Druck ausreichend.

Nach dem Verpressen des Schichtaufbaus wird die noch immer großformatige, beschichtete und verpresste Holzwerkstoffplatte in einzelne Paneele aufgeteilt. Seitenflächen der Paneele werden anschließend spanabhebend bearbeitet, um Verbindungs- und Verriegelungsmittel anzuarbeiten. Diese Verbindungs- und Verriegelungsmittel können in einfachen Nut- und Federprofilierungen bestehen oder kompliziertere Profile umfassen, mit denen eine Verriegelung zweier verbundener Paneele beispielsweise sowohl in senkrechter als auch in horizontaler Richtung gewährleistet wird. Zudem können auch Verbindungs- und Verriegelungsmittel an Seitenkanten von Paneelen angearbeitet werden, in die noch separate Verbindungselemente, die beispielsweise aus Kunststoff bestehen können, eingesetzt werden. Für das Verlegen bzw. Verbinden zweier identischer Paneele ist es jedoch von Vorteil, wenn Verbindungs- und Verriegelungsmittel so aus dem Paneel herausgearbeitet, beispielsweise herausgefräst werden, dass zwei identische Paneele ohne zusätzliche Verbindungselemente miteinander verbunden und verriegelt werden können.

Die so hergestellten grundierten Paneele werden abschließend transportsicher verpackt. Zuvor kann eine Qualitätskontrolle durchgeführt werden, um eine möglichst hohe Qualität der grundierten Paneele zu gewährleisten.

Da der Laminathersteller nur noch grundierte Paneele herstellt, auf die keinerlei Dekorschicht aufgebracht werden muss, verringern sich für den Laminathersteller sowohl die Lagerhaltungs- als auch die Materialkosten. Es müssen keine Dekorpapiere in verschiedenen Dekoren bevorratet werden oder Prägewalzen oder Prägeplatten bereitgestellt werden, um Paneele mit verschiedenen Dekoren herstellen zu können. Dadurch wird sowohl der benötigte Lagerplatz als auch das gebundene Kapital deutlich verringert. Zudem entfallen Umrüstzeiten, da alle Paneele die gleiche Grundierung aufweisen. Dadurch kann die Produktionsanlage wirtschaftlicher arbeiten und die Herstellungskosten werden weiter reduziert.

Um eine besonders gute Bedruckbarkeit der so hergestellten Paneele zu gewährleisten, ist die Grundierung insbesondere eingefärbt. Hierbei sind insbesondere mehrere Farben möglich, als Beispiele seien weiß oder beige genannt. Dabei werden als Druckbasis beispielsweise eingefärbte Papiere eingesetzt, deren Farbe dem hellsten Farbton im aufzudruckenden Dekor entspricht. Ist, wie hier, das aufzubringende Dekor noch nicht bekannt, ist daher eine weiße oder zumindest sehr helle Grundierung vorteilhaft. Jede andere Farbe ist jedoch ebenso als Grundierung denkbar. Um besondere Effekte beim späteren Bedrucken von derart vorgrundierten Paneelen zu erreichen, kann in die Grundierung bereits eine Struktur eingebracht sein. Dies geschieht vorteilhafterweise beim Verpressen des Schichtaufbaus, insbesondere durch dabei verwendete Prägeplatten oder Prägewalzen.

Derart hergestellte vorgrundierte Paneele weisen insgesamt jedoch eine sehr glatte Oberfläche auf. Insbesondere ist die Oberfläche homogen und, sofern die Grundierung eingefärbt ist, gut deckend. Dies ist in Kombination mit einer sehr geringen Fehlerhäufigkeit durch Oberflächenfehler oder Schmutzpartikel insbesondere für einen Digitaldruck, bei dem das vorgrundierte Paneel mittels eines Digitaldruckers direkt bedruckt wird, sehr wichtig. Eine eingefärbte Holzwerkstoffplatte kann die Funktion einer Grundierung zumindest teilweise übernehmen.

Durch die sehr geringe Oberflächenrauigkeit der Oberseite des Paneels, die beispielsweise kleiner als 20 µm, besonders bevorzugt sogar kleiner als 10 µm ist, wird beim späteren Bedrucken ein sehr gutes Druckbild erreicht. Als Prüfnorm für die Oberflächenrauigkeit wird überwiegend die ISO 4287-1 verwendet. Wenn die Holzwerkstoff platte oder die Grundierung eingefärbt ist, gilt für die Farbe vorteilhafterweise, dass ein Helligkeitsparameter L größer ist als 92, ein Rot-Grün-Wert A zwischen -5 und +5, bevorzugt zwischen -2 und +2 und ein Gelb-Blau-Wert B zwischen -15 und +15, bevorzugt zwischen -8 und +8 liegt. Durch die angegebenen Werte werden Farben im CIELAB-Farbraum beschrieben. Die normative Basis dieses Farbraums ist die DIN 6174. Die Farbe der Grundierung bzw. der eingefärbten Holzwerkstoffplatte sollte dabei dem hellsten Farbton im aufzubringenden Dekor entsprechen. Sofern dieses, wie vorliegend, noch nicht bekannt ist, bietet sich naturgemäß eine besonders helle, insbesondere weiße, Oberflächenfarbe an.

Derartig vorgrundierte Paneele werden beim Laminathersteller in einem zentralen Lager, beispielsweise einem Hochregallager gelagert. Zuvor können sie insbesondere so gereinigt und verpackt werden, dass sie im weiterverarbeitenden Betrieb direkt bedruckt oder verarbeitet werden können, ohne dass die Paneele dort nochmals gereinigt werden müssen. Dies muss jedoch nur noch für eine einzige Sorte Paneele vorgehalten werden, sodass eine platzintensive Lagerung von Paneelen mit unterschiedlichen Dekoren, unterschiedlichen Oberflächenstrukturen oder unterschiedlichen Oberflächengüten nicht mehr nötig ist.

Die grundierten Paneele werden anschließend zu einem weiterverarbeitenden Betrieb transportiert. Dies kann beispielsweise ein mit dem Laminathersteller verbundener Franchise-Betrieb, ein Baumarkt, ein Innenausstatter, Händler oder ein Bodenverleger sein.

Bei diesem werden die vorgrundierten Paneele aus der transportsicheren Verpackung ausgepackt. Anschließend wird eine Dekorschicht mit einem Dekor nach unmittelbarem Kundenwunsch auf die Grundierung oder den Primer aufgebracht und von wenigstens einer Nutzschicht abgedeckt.

Das Aufbringen der Dekorschicht auf die Grundierung oder den Primer kann auf unterschiedliche Weise geschehen.

Die Dekorschicht kann insbesondere direkt auf die Grundierung oder den Primer auf gedruckt werden. Dabei durchläuft das vorgrundierte Paneel ein Druckwerk, das vorteilhafterweise ein Digitaldrucker ist. Dadurch ist es möglich, insbesondere verschiedene Dekore schnell und einfach nacheinander auf verschiedene Paneele zu drucken, ohne das Druckwerk auf das neue Dekor umrüsten zu müssen. Dadurch, dass nur noch einzelne Paneele bedruckt werden müssen und nicht, wie im Stand der Technik üblich, ganze großformatige Holzwerkstoffplatten, kann das Druckwerk klein und kompakt und damit platz- und kostengünstig ausgeführt sein. Alternativ kann auch ein Dekorpapier, das in Form großer Rollen vorgehalten werden kann, mit einem Dekor bedruckt werden und anschließend als Dekorschicht auf die Grundierung oder den Primer aufkaschiert werden.

In beiden Fällen sollte die Dekorschicht durch wenigstens eine Nutzschicht abgedeckt werden. Die Anzahl sowie die Art der aufgebrachten Nutzschichten hängt dabei stark vom geplanten Einsatzort der so dekorierten Paneele ab. Insbesondere bei Wand- und Deckenpaneelen ist es oftmals ausreichend, wenn die wenigstens eine Nutzschicht die Dekorschicht wischfest überdeckt. Werden die bedruckten Paneele jedoch als Fußbodenpaneel eingesetzt, sind sie einer deutlich höheren Belastung ausgesetzt. In diesem Fall können insbesondere mehrere Nutzschichten aufgebracht werden, denen Zusätze beigemischt sind, die eine Abrieb- und/oder Kratzfestigkeit der Oberseite der dann fertigen Paneele erhöhen.

Die wenigstens eine Nutzschicht kann dabei aus einem Kunstharz bestehen und nach dem Aufbringen durch Verpressen unter Druck- und Temperatureinfluss ausgehärtet werden. Beim Verpressen kann auch eine Struktur, die insbesondere zum Dekor der Dekorschicht korrespondiert, in die wenigstens eine Nutzschicht eingeprägt werden, um so beispielsweise das natürliche Erscheinungsbild eines Echtholzdekors realitätsnäher auszugestalten.

Alternativ kann die wenigstens eine Nutzschicht auch in Form wenigstens einer Lackschicht ausgebildet sein, die dann unter Einsatz energiereicher Strahlung, beispielsweise Elektronen- oder UV-Strahlung, aushärtet. In diesem Fall kann auch ein strukturbildender Lack aufgebracht werden, über den beim Aushärten eine Struktur in die wenigstens eine Nutzschicht eingebracht werden kann.

Beim Aushärten durch energiereiche Strahlung und durch Verpressen kann insbesondere eine begehbare Oberfläche des Paneels gewährleistet werden. Dies geschieht insbesondere dann, wenn das Paneel als Fußbodenpaneel verwendet werden soll.

In allen bisher genannten Fällen muss im weiterverarbeitenden Betrieb, beispielsweise in einem Baumarkt, die Dekorschicht mit wenigstens einer Schicht aus einem Kunstharz oder einem Lack abgedeckt und anschließend ausgehärtet werden. Dazu ist ein relativ hoher apparativer Aufwand nötig, der neben einem erhöhten Platzaufwand auch relativ hohe Investitionskosten nach sich zieht. Zudem kann es nötig sein, für die Bedienung einer Vorrichtung zur Durchführung der im weiterverarbeitenden Betrieb nötigen Verfahrensschritte, insbesondere bei der Beschichtung mit Kunstharz oder Lack, Fachpersonal einzusetzen.

In besonders einfacher Weise kann daher die Dekorschicht und die wenigstens eine Nutzschicht mit folgenden Verfahrensschritten auf das vorgrundierte Paneel aufgebracht werden. Auf einem Trägermedium, beispielsweise einer Folie, wird die wenigstens eine Nutzschicht bereitgestellt. Sollten mehrere Nutzschichten nötig sein, befinden sich diese in ungekehrter Reihenfolge auf dem Trägermedium. Die Nutzschicht, die beim fertigen Paneel die Oberseite bilden soll, befindet sich folglich direkt auf dem Trägermedium und wird von den Nutzschichten, die beim fertigen Paneel unter ihr liegen, abgedeckt. Beim weiterverarbeitenden Betrieb werden verschiedene Schichtaufbauten dieser wenigstens einen Nutzschicht auf dem Trägermedium vorgehalten. Die Nutzschicht, die beim fertigen Paneel die Dekorschicht abdecken soll, befindet sich im Schichtaufbau auf dem Trägermedium folglich ganz oben. Diese wird nun mit dem auf das Paneel aufzubringenden Dekor bedruckt. Anschließend wird der gesamte Schichtaufbau so auf die Grundierung oder den Primer aufgelegt, dass nun das Dekor direkt auf der Grundierung oder dem Primer aufliegt und von der wenigstens einen Nutzschicht abgedeckt wird. Ganz oben im Schichtaufbau befindet sich nun das Trägermedium, beispielsweise die Trägerfolie. Dieser Schichtaufbau wird nun mit dem vorgrundierten Paneel verpresst. Dazu ist es ausreichend, wenn auf den Schichtaufbau Druck ausgeübt wird. Da die wenigstens eine Nutzschicht, die sich auf dem Trägermedium befindet, bereits fertig ausgehärtet ist, ist eine Einwirkung unter erhöhtem Temperatureinfluss unnötig.

Anschließend wird das Trägermedium abgezogen und die Dekorschicht und die wenigstens eine Nutzschicht verbleiben auf der Grundierung bzw. dem Primer. Auf diese Weise ist es möglich, das grundierte Paneel fertig zu veredeln, ohne flüssige Harze und Lacke aufzubringen, die noch ausgehärtet werden müssen. Dadurch wird sowohl der apparative Aufwand als auch das Investitionsvolumen deutlich reduziert. In die wenigstens eine Nutzschicht kann beim Verpressen des Schichtaufbaus auch in dieser Ausgestaltung eine Struktur eingeprägt werden, die insbesondere zum Dekor der Dekorschicht korrespondiert.

Eine Vorrichtung zum Veredeln eines Paneels nach einem eben beschriebenen Verfahren umfasst dabei insbesondere ein Druckwerk zum Aufdrucken des Dekors auf die Grundierung oder den Primer, das Dekorpapier oder das mit der wenigstens einen Nutzschicht beschichtete Trägermedium in im Grunde genommen jeder gewünschten Farbe und Maserung und zudem eine Eingabeeinrichtung, mit der eine Auswahl eines Dekors eingegeben werden kann, das in Form von elektronischen Daten in einem Datenspeicher hinterlegt ist. Die Vorrichtung umfasst zudem eine elektrische Steuerung, die eingerichtet ist, das ausgewählte Dekor aus dem Datenspeicher auszulesen und das Druckwerk so anzusteuern, dass das ausgewählte Dekor gedruckt wird. Für den Kunden besonders komfortabel umfasst diese Vorrichtung zudem eine Anzeigeeinrichtung, über die die zur Verfügung stehenden Dekore dem Benutzer angezeigt werden.

Konkret kann ein derartiges Verfahren beispielsweise in einem Baumarkt wie folgt ablaufen.

Ein Kunde, der Paneele für eine bestimmte Raumgröße benötigt, erhält zunächst die Informationen, welche Paneelanzahl er benötigt. An einer Anzeigeeinrichtung einer Vorrichtung, mit der das grundierte Paneel wie oben beschrieben veredelt werden kann, kann er sich verschiedene Dekore, die zur Auswahl stehen, ansehen. Diese Dekore sind in Form von elektronischen Daten in einem Datenspeicher innerhalb der Vorrichtung abgelegt. Alternativ könnte die Vorrichtung beispielsweise auch über ein Laufwerk, beispielsweise für eine CD, DVD oder ähnliches, verfügen. Der Kunde kann dann auch einen entsprechenden Datenträger selbst mitbringen, auf dem Dekore in einem vorbestimmten Datenformat abgespeichert sind. Auf diese Weise ist es möglich, dass der Kunde sein ganz individuelles Dekor auf Paneele gedruckt bekommt.

Nachdem der Kunde ein Dekor ausgewählt hat, gibt er diese Auswahl über die Eingabeeinrichtung ein. Zudem kann der Kunde wählen, wie viele Paneele mit dem ausgewählten Dekor bedruckt werden sollen und wofür er diese Paneele verwenden möchte. Abhängig vom eingegebenen Verwendungszweck werden unterschiedliche Nutzschichten auf das Paneel aufgebracht.

Innerhalb der Vorrichtung wird nun auf ein vorgrundiertes profiliertes Paneel das gewünschte Dekor aufgebracht und dieses mit der für notwendig befundenen Kombination aus Nutzschichten abgedeckt. Nachdem diese ausgehärtet sind, sofern das nötig ist, kann der Kunde die mit seinem individuellen Dekor bedruckten Paneele in Empfang nehmen und verwenden.

Sollte er dabei merken, dass er nicht genügend Paneele hat bedrucken lassen oder es beispielsweise notwendig werden, einzelne im Laufe der Zeit verschlissene Paneele auszutauschen, ist es jederzeit möglich, an einer beschriebenen Vorrichtung selbst einzelne Paneele nachzuordern.

Dadurch wird die Flexibilität bei der Herstellung von Laminatpaneelen deutlich erhöht und es sind auch kleinste Auftragsmengen mit unterschiedlichsten Dekoren wirtschaftlich sinnvoll herstellbar.

Mit Hilfe einer Zeichnung wird nachfolgend das beschriebene Verfahren näher erläutert. Es zeigt:
- Figur 1-: eine schematische Darstellung eines Ausführungsbeispiels des Verfahrens zum Herstellen grundierter Paneele,
- Figur 2-: einen Querschnitt durch ein gemäß dem Verfahren nach Figur 1 hergestellten Paneel mit einem vergrößerten Ausschnitt daraus, und
- Figur 3-: eine schematische Darstellung eines Ausführungsbeispiels des Verfahrens zum Veredeln eines Paneels, wie es in einem weiterverarbeitenden Betrieb durchgeführt wird.

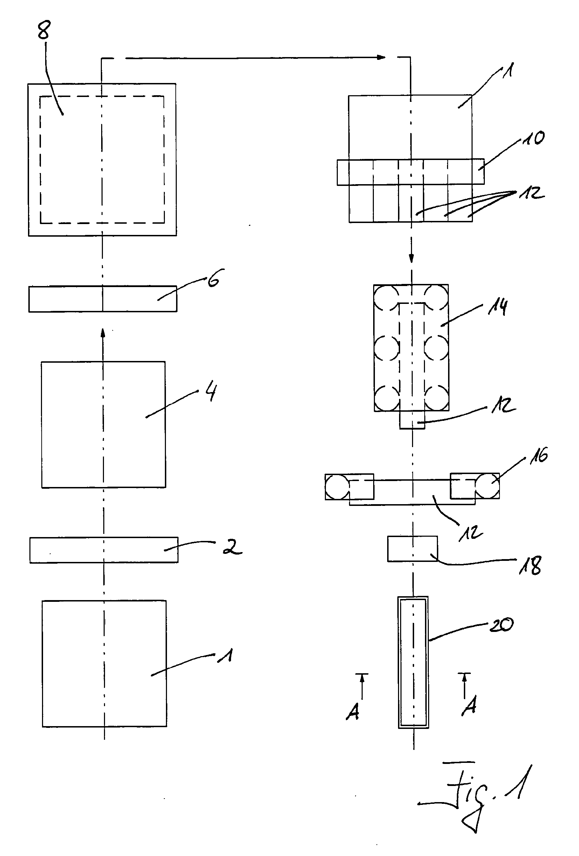

Figur 1 zeigt die schematische Darstellung eines Verfahrens zum Herstellen eines grundierten Paneels als Halbzeug, wie es beim Laminathersteller durchgeführt werden kann. Die Verarbeitungsrichtung ist durch Pfeile gekennzeichnet. Das Herstellungsverfahren beginnt in Figur 1 unten links.

Das Verfahren beginnt mit einer großformatigen Holzwerkstoffplatte 1. Die Holzwerkstoffplatte 1 wird zunächst einer Vorbehandlungseinrichtung 2 zugeführt, in der die großformatige Holzwerkstoffplatte 1 für die Durchführung des Verfahrens vorbereitet wird. Innerhalb dieser Vorbehandlungseinrichtung 2 kann beispielsweise eine Oberseite der Holzwerkstoffplatte 1 geschliffen werden, oder es kann eine sonstige Glättung der Oberfläche stattfinden. Die Holzwerkstoffplatte 1 wird so vorbereitet, dass eine Materialschicht auf die Oberseite aufgebracht werden kann. Dazu kann die Holzwerkstoff platte 1 in der Vorbehandlungseinrichtung 2 beispielsweise zusätzlich gereinigt und/oder erwärmt werden. Zudem kann eine Qualitätssicherung stattfinden, um sicher zu stellen, dass die Oberfläche der Holzwerkstoffplatte 1 für die Durchführung des Verfahrens geeignet ist.

Nachdem die Holzwerkstoffplatte 1 in der Vorbehandlungseinrichtung 2 vorbereitet wurde, wird sie einer Grundierungseinrichtung 4 zugeführt. In der Grundierungseinrichtung 4 wird auf die Oberseite der Holzwerkstoffplatte 1 eine Grundierung in Form einer Kunstharzschicht aufgebracht. Dies kann beispielsweise durch Auftragen einer flüssigen Kunstharzschicht oder in Form eines harzgetränkten Papiers geschehen. Alternativ kann beispielsweise auch eine Folie, die insbesondere mit einem Kunstharz beschichtet ist, auf die Oberseite der Holzwerkstoffplatte 1 aufgeklebt werden. Hierzu kann auch ein kunstharzhaltiger Klebstoff verwendet werden.

Nachdem die Holzwerkstoffplatte 1 die Grundierungseinrichtung 4 durchlaufen hat, wird sie im in Figur 1 gezeigten Ausführungsbeispiel einer Trocknungseinrichtung 6 zugeführt. Hier wird gegebenenfalls die in der Grundierungseinrichtung 4 auf die Oberseite der Holzwerkstoffplatte 1 aufgebrachte Grundierung in Form einer Kunstharzschicht getrocknet. In einem nicht gezeigten Verfahrensschritt wird auf eine der Oberseite gegenüberliegende Unterseite der Holzwerkstoffplatte 1 eine Beschichtung aufgebracht.

Anschließend durchläuft die beschichtete Holzwerkstoffplatte 1 im in Figur 1 gezeigten Verfahren eine Kurztaktpresse 8, in der die Holzwerkstoffplatte 1 mit der in der Grundierungseinrichtung 4 aufgebrachten Grundierung in Form einer Kunstharzschicht unter Druck- und Temperatureinfluss verpresst wird. Selbstverständlich sind auch andere Formen einer Presse, beispielsweise eine Bandpresse, denkbar. Insbesondere, wenn in der Grundierungseinrichtung 4 die Grundierung in Form einer Kunstharzschicht beispielsweise mittels einer Folie bereits fertig ausgehärtet aufgebracht wird, ist gegebenenfalls auch ein Verpressen lediglich unter Druckeinfluss ohne erhöhte Temperatur ausreichend.

Die in der Kurztaktpresse 8 verpressten grundierten Holzwerkstoffplatten 1 durchlaufen anschließend eine Zuschneidevorrichtung 10, in der die großformatige Holzwerkstoffplatte 1 in kleinere Paneele 12 aufgeteilt wird. An die Seitenkanten der Paneele 12 werden anschließend Profile angearbeitet, die ein Verbinden zweier identischer Paneele 12 miteinander ermöglichen. Dabei werden zunächst in einer ersten Fräseinrichtung 14 Längsprofile aus den Seitenflächen der Paneele 12 herausgefräst. Damit ist es möglich, zwei identische Paneele 12 miteinander entlang ihrer längeren Seitenflächen zu verbinden.

Anschließend durchlaufen die Paneele 12 eine zweite Fräseinrichtung 16, in der auch die kurzen Seitenflächen mit einem Profil, in diesem Fall ein Querprofil, versehen werden. Damit sind auch identische Paneele 12 entlang ihrer kurzen Seitenkanten miteinander verbindbar.

Anschließend durchlaufen die grundierten und mit Verbindungsmitteln versehenen Paneele eine Qualitätssicherung 18, bevor sie in einer Packstation 20 transportsicher verpackt werden.

Beim Verpressen der mit der Grundierung beschichteten Holzwerkstoffplatte in einer Kurztaktpresse 8 oder in einer anderen Pressvorrichtung kann insbesondere eine Struktur in die Grundierung eingeprägt werden. Zusätzlich oder alternativ dazu kann auch ein Relief in der großformatigen Holzwerkstoffplatte 1 vorgesehen sein. Um ein Relief in die Holzwerkstoffplatte 1 einprägen zu können, kann insbesondere die Holzwerkstoffplatte 1 vor dem Aufbringen der Grundierung in der Grundierungseinrichtung 4 mit Wasser besprüht werden. Ein beispielhaftes Verfahren ist in der DE 10 2008 008 240 beschrieben worden.

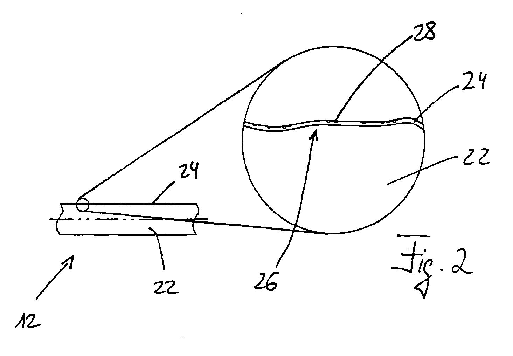

Figur 2 zeigt ein Schnitt entlang de Linie A-A aus Figur 1 durch ein vorgrundiertes Paneel 12, sowie ein vergrößerten Ausschnitt daraus. Das Paneel 12 umfasst einen Kern 22, auf den eine Grundierung 24 aufgebracht wurde. Die Oberseite des Kerns 22 zeigt ein Relief 26 in Form einer unebenen Oberfläche des Kerns 22. In die Grundierung 24 ist eine Struktur 28 eingeprägt, die deutlich feinere Elemente aufweist, als das in den Kern 22 eingeprägte Relief 26.

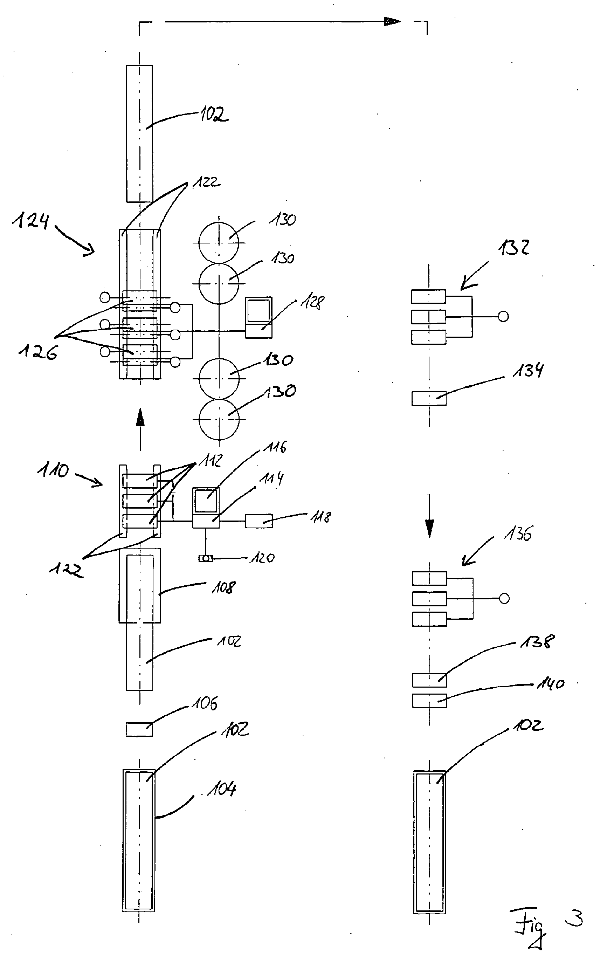

Figur 3 zeigt die schematische Darstellung eines Verfahrens zum Veredeln eines Paneels, wie es in einem weiterverarbeitenden Betrieb, beispielsweise einem mit dem Laminathersteller verbundenen Franchise-Nehmer, einem Baumarkt oder ähnlichem, durchgeführt werden kann. Die Verarbeitungsrichtung ist durch Pfeile gekennzeichnet. Das Verarbeitungsverfahren beginnt in Figur 3 unten links.

Die fertig grundierten Paneele 102 werden in einer transportsicheren Verpackung 104 vom Laminathersteller kommend beim weiterverarbeitenden Betrieb angeliefert. In einem ersten Verfahrensschritt werden die Paneele 102 dieser transportsicheren Verpackung 104 entnommen. Im in Figur 3 gezeigten Ausführungsbeispiel des Verfahrens werden die Paneele 102 anschließend einer Reinigungsvorrichtung 106 zugeführt, in der die Oberfläche der Paneele 102 von gegebenenfalls anhaftenden Schmutzresten und Staub gereinigt wird und so für das Aufbringen der Dekorschicht vorbereitet wird. Denkbar ist aber auch, dass die Paneele 102 im Betrieb des Laminatherstellers für die spätere Bedruckung geeignet gereinigt worden. Diese können dann gereinigt in die transportsichere Verpackung 104 eingelegt worden sein. Beispielsweise durch luftdichtes Verschweißen der Transportpackung 104 in eine Folie kann ausgeschlossen werden, dass die Paneele 102 anschließend nochmals gereinigt werden müssen, bevor sie bedruckt werden.

Nachdem die Paneele 102 ggf. die Reinigungsvorrichtung 106 durchlaufen haben werden sie auf einer Beschleunigungsstrecke 108 ausgerichtet und auf die gewünschte Distanz von einander beabstandet. Die Paneele 102 werden anschließend einem Druckwerk 110 zugeführt. Hier wird die Oberfläche des Paneels 102 mit der aufzubringenden Dekorschicht bedruckt. Dafür weist das Druckwerk 110 im in Figur 3 gezeigten Ausführungsbeispiel drei Druckköpfe 112 auf. Je nach gewünschtem Dekor kann das Druckwerk 110 auch über mehr oder weniger Druckköpfe 112 verfügen. Am Druckwerk 110 angeschlossen ist eine elektronische Datenverarbeitungseinrichtung 114. Diese verfügt über eine in Figur 3 nicht gezeigte Eingabevorrichtung, über die der Benutzer einer Vorrichtung zum Durchführen des Verfahrens das gewünschte Dekor auswählen kann. Die elektronische Datenverarbeitungsvorrichtung 114 verfügt dazu über eine Anzeigeeinrichtung 116, über die die verfügbaren Dekore, die beispielsweise auf einem elektronischen Speichermedium hinterlegt sind, dem Benutzer angezeigt werden. Aus dieser Auswahl kann der Benutzer das Dekor auswählen, das er auf seine Paneele gedruckt haben möchte.

Im in Figur 3 gezeigten Ausführungsbeispiel verfügt die elektronische Datenverarbeitungseinrichtung 114 zusätzlich über einen Scanner 118. Bringt nun ein Benutzer der Vorrichtung zum Veredeln des Paneels 102 ein individuelles Dekor, beispielsweise in Form eines papierhaften Ausdruckes mit, kann das Muster über den Scanner 118 in die elektronische Datenverarbeitungseinrichtung 114 eingelesen werden und über die Druckköpfe 112 des Druckwerks 110 auf die Oberseite des Paneels aufgebracht werden. Der Benutzer ist damit nicht mehr auf die in der elektronischen Datenverarbeitungseinrichtung 114 hinterlegte Musterauswahl beschränkt.

Zudem verfügt die elektronische Datenverarbeitungseinrichtung 114 im in Figur 3 gezeigten Ausführungsbeispiel über eine Kamera 120. Über diese Kamera 120 ist es beispielsweise möglich, Dekore von Oberflächen, die der Kunde beispielsweise mitgebracht hat, die sich jedoch nicht scannen lassen, zu fotografieren und so in die elektronische Datenverarbeitungseinrichtung einzulesen. Auch derartige Dekore können über die Druckköpfe 112 des Druckwerks 110 auf die Oberseite des Paneels 102 aufgebracht werden. Es kann auch beispielsweise ein CD-Rom-Laufwerk vorgesehen sein, über das der Kunde ein in einem definierten Format auf einer CD-Rom abgespeichertes Dekor in die Datenverarbeitungseinrichtung 114 einlesen lassen kann.

Damit die Paneele 102 beim Auftragen des Dekors durch die Druckköpfe 112 exakt ausgerichtet bleiben, werden sie in dem Druckwerk 110 durch Führungselemente 122 geführt.

Um ein möglichst optimales Ergebnis zu gewährleisten, sind die im Datenspeicher der elektronischen Datenverarbeitungseinrichtung 114 hinterlegten Dekorvorschläge auf die möglichen Formate der zu bedruckenden Paneele 102 optimiert. Individuelle Dekore eines Benutzers der beschriebenen Vorrichtung, die beispielsweise über den Scanner 118, das Laufwerk oder die Kamera 120 in die elektronische Datenverarbeitungseinrichtung 114 eingelesen wurden, können an die Paneelformate angepasst werden. Die im Datenspeicher der elektronischen Datenverarbeitungseinrichtung 114 hinterlegte Dekorauswahl kann dabei insbesondere online aktualisiert werden.

Nachdem die Oberseite der Paneele 102 mit einem Dekor bedruckt wurde, verlassen die Paneele 102 das Druckwerk 110 und werden einer Beschichtungsvorrichtung 124 zugeführt. Im in Figur 3 dargestellten Ausführungsbeispiel umfasst diese drei Auftragsvorrichtungen 126, über die jeweils eine Nutzschicht auf die Oberseite des Paneels aufgetragen werden kann. Die Auftragsvorrichtungen 126 werden durch eine zweite elektronische Datenverarbeitungseinrichtung 128 gesteuert. Diese verfügt über ein Mischprogramm, mit dem die Zusammensetzung der einzelnen Nutzschichten gesteuert wird. Die zweite elektronische Datenverarbeitungseinrichtung 128 kann dabei verschiedene Vorratsbehälter 130 ansteuern und deren Inhalt zur jeweils gewünschten Nutzschicht mischen. In einem dieser Vorratsbehälter 130 befindet sich der Grundstoff jeder einzelnen Nutzschicht, der beispielsweise ein Kunstharz oder auch ein Lack sein kann. Die weiteren Vorratsbehälter 130 enthalten beispielsweise Härter, Korund zur Steigerung der Abriebfestigkeit des fertig beschichteten Paneels und weitere Additive, die je nach Verwendungszweck des dann fertigen Paneels ausgewählt werden.

Wie im Druckwerk 110 können auch in der Beschichtungsvorrichtung 124 verschiedene Paneelformate verarbeitet werden. Auch innerhalb der Beschichtungsvorrichtung 124 werden die zu beschichtenden Paneele 102 über Führungselemente 122 geführt. Ein möglicher Schichtaufbau besteht aus mehreren Schichten strahlenhärtbaren Lackes. Dabei werden beispielsweise zwei Schichten eines antiabrasiven UV-Grundlackes mit einem Walzensystem in einer Auftragsmenge von beispielsweise 35g/m² auf die zu beschichtende Oberseite des Paneels 102 aufgebracht. Jede Auftragsvorrichtung 126 ist dabei in Form eines Walzensystems ausgebildet. Nachdem die beiden Schichten des antiabrasiven Grundlackes aufgebracht sind, können zwei weitere Schichten eines UV-Schleifgrundes ebenfalls mit je einer Auftragsvorrichtung 126, die als Walzensystem ausgebildet ist, aufgebracht werden. Die Auftragsmenge beträgt hier beispielsweise 15 g/m² je Schleifgrundschicht. Abschließend wird über eine weitere Auftragsvorrichtung 126 eine Schicht eines UV-Decklackes in einer Auftragsmenge von beispielsweise 35 g/m² aufgebracht. Gegebenenfalls wird vor dem Auftragen einer jeden Lackschicht die zuvor aufgebrachte Lackschicht mittels UV- oder Elektronenstrahlen ausgehärtet. Die in Figur 3 gezeigten Ausführungsbeispiel werden die verschiedenen Nutzschichten, die insbesondere auch aus einem Kunstharz bestehen können, direkt nacheinander auf gebracht, ohne dass die zuvor durch eine Auftragsvorrichtung 126 aufgebrachte Nutzschicht getrocknet wird.

Eine Auftragsvorrichtung 126 in Form von Walzen kann dabei sowohl im Gleich- als auch im Gegenlauf betrieben werden. Um möglichst viele Paneele 102 in einer vorgegebenen Zeit beschichten zu können, werden große Vorschubgeschwindigkeiten derartiger Auftragsvorrichtungen 126 bevorzugt. Geeignet sind hier insbesondere Vorschubgeschwindigkeiten zwischen 10 m/min und 30 m/min.

Werden als Nutzschichten Lackschichten durch die Auftragsvorrichtungen 126 in der Beschichtungsvorrichtung 124 aufgebracht, können diese Auftragsvorrichtungen 126 auch in Form einer Spritz- oder Sprühlackiereinrichtung, eines digitalen Druckkopfes, eines Giesskopfes oder eines Vakuumaten ausgebildet sein. In jeder aufgebrachten Schicht können abriebfeste Partikel, beispielsweise Korund, oder andere Zusätze enthalten sein. Diese hängen ab von der späteren Verwendung des dann fertigen Paneels.

Nachdem die Paneele 102 die Beschichtungsvorrichtung 124 verlassen haben werden sie einer ersten Aushärteeinrichtung 132 geführt. Im in Figur 3 gezeigten Ausführungsbeispiel werden die in der Beschichtungsvorrichtung 124 aufgebrachten Nutzschichten, die beispielsweise in Form eines Lackes vorliegen können, lediglich durch energiereiche Strahlen, beispielsweise Elektronen oder UV-Strahlen, nur angeliert. Anschließend wird in einer Prägeeinrichtung 134 eine Struktur in die Oberseite des beschichteten Paneels, also die Nutzschichten, eingeprägt. Diese Struktur korrespondiert insbesondere zum gewählten Dekor der in dem Druckwerk 110 aufgebrachten Dekorschicht.

Das Einprägen der Struktur kann dabei beispielsweise mittels einer strukturierten Walze, einem strukturierten Band oder eines Strukturgeberpapiers oder einer Strukturgeberfolie geschehen.

Alternativ kann auch ein Overlay-Papierbogen aufgelegt und anschließend in einer Kurztaktpresse unter Wirkung von Druck und Wärme verpresst werden. Dabei sind insbesondere in den Pressblechen Strukturen vorgesehen, die sich beim Verpressen in die Oberseite des Paneels 102 einprägen.

Insbesondere bei der Verwendung von Lacken als Nutzschichten kann auch eine strukturbildende Menge an Lack mittels eines beispielsweise digital angesteuerten Druckkopfes aufgebracht werden. Alternativ ist auch ein Mittel denkbar, das den Verlauf des Lackes stört. Auch dieses Mittel kann unter Anwendung eines digital angesteuerten Druckkopfes aufgebracht werden. Durch die Verwendung eines derartigen Druckkopfes ist es möglich, das Mittel oder den Lack nur an bestimmten Stellen der Oberfläche des Paneels 102 aufzubringen und so strukturbildende Vertiefungen und Erhöhungen zu erzeugen. Soll die in die Oberseite geprägte Struktur zum Dekor der Dekorschicht korrespondieren, muss das Paneel 102 vor dem Durchlaufen der Prägeeinrichtung 134 ausgerichtet werden. Im in Figur 3 dargestellten Ausführungsbeispiel durchläuft das Paneel 102 nach dem Durchlaufen der Prägeeinrichtung 134 eine zweite Aushärtevorrichtung 136. Hier werden die ggf. angelierten Nutzschichten vollständig ausgehärtet, so dass eine für die jeweils gewählte Verwendung des Paneels 102 geeignete Oberfläche entsteht.

Anschließend durchlaufen die Paneele 102 eine Qualitätssicherung 138, ggf. eine Etikettierung 140 oder ähnliches ggf. zusätzlich auch noch eine Reinigungseinrichtung und werden abschließend verpackt und können vom Kunden mitgenommen werden.

Besonders vorteilhafter Weise ist die elektronische Datenverarbeitungseinrichtung 114 mit der zweiten elektronischen Datenverarbeitungseinrichtung 128 gekoppelt. Einem Kunden werden im weiterverarbeitenden Betrieb dann beispielsweise mittels eines Programms verschiedene Auswahlmöglichkeiten angegeben. Er kann dabei beispielsweise wählen, ob das Paneel 102 privat oder gewerblich, im Trocken- oder Feuchtbereich genutzt werden soll, wobei Hinweise auf verschiedene gewerbliche Nutzungsklassen gegeben werden. Zudem kann der Kunde entscheiden, ob es sich bei dem zu beschichtenden Paneel 102 später um ein Fußboden-, Wand- oder Deckenpaneel handelt. Diese Informationen sind für die in der Beschichtungsvorrichtung 124 aufzubringenden Nutzschichten von Bedeutung. In einer Vorrichtung zum Veredeln eines Paneels werden dann automatisch die zum Erreichen einer bestimmten Verschleißklasse, beispielsweise AC3 gemäß der DIN EN 13329, notwendigen Nutzschichten mit den erforderlichen Zusatzstoffen und Additiven aufgebracht. Lackierung und Härtung erfolgen dabei automatisch.

Der Kunde kann zudem das Format des Paneels und die Dicke der Trägerplatte auswählen sowie das gewünschte Dekor und ggf. eine einzuprägende Struktur. Mittels dieser Vorgaben von Kundenseite können sowohl das Druckwerk 110 als auch die Beschichtungsvorrichtung 124 auf die Dicke und das Format der zu beschichtenden Paneele 102 eingestellt werden.

Weitere Wahlmöglichkeiten für den Kunden sind beispielsweise die Wahl einer bestimmten Verpackung. So können die Paneele lediglich in einen Pappkarton eingelegt werden oder mittels einer Folie, beispielsweise einer Schrumpffolie, auch gegen Spritzwasser geschützt verpackt werden. Zudem kann der Kunde beispielsweise entscheiden, ob er die fertigen Paneele gleich mitnehmen möchte oder sie zu einem späteren Zeitpunkt selbst abholt oder ob sie durch eine Fremdfirma geliefert werden sollen. Auch eine Installationsoption durch eine Fachfirma ist denkbar. Zudem kann der Kunde, ggf. gegen Aufpreis, Gewährleistungs- und Garantieoptionen auswählen und ggf. entscheiden, ob er die Paneele kauft oder mietet.

Innerhalb einer Anlage zum Veredeln eines Paneels nach dem beschriebenen Verfahren kann die Lackierung und die Aushärtung der Lackschichten automatisch erfolgen. Da die verwendeten Lacke oder Harzschichten, die als Nutzschichten aufgebracht werden, für diese Anwendung insbesondere im Hinblick auf ihre Viskosität optimiert werden können, kann ein glatter Auftrag ohne Mehr- oder Minderlackaufträge am Beginn und am Ende der zu beschichtenden Paneele 102 gewährleistet werden. Um die bereits an den Paneelen 102 angeformten Verbindungs- und Verriegelungselemente zu schützen, können Masken zum Einsatz kommen, die das Verschmutzen oder Kontaminieren dieser Verbindungs- und Verriegelungselemente verhindern. Insbesondere beim Aushärten aufgebrachter Lackschichten kann durch die Einstellung der Strahlenintensität die Haftung der einzelnen Schichten aufeinander und die Endaushärtung realisiert und gewährleistet werden. Für Mehrfachaufträge kann der entsprechende Anlagenteil, also Beschichtungsvorrichtung 124 und erste Aushärtevorrichtung 132 und zweite Aushärtevorrichtung 136 mehrfach durchlaufen werden.

Zur optimalen Nutzung einer derartigen Anlage können mehrere Aufträge direkt nacheinander produziert werden. Nachdem ein Auftrag abgeschlossen ist, kann eine vollautomatische Reinigung insbesondere der Auftragsvorrichtungen 126 erfolgen, um für den folgenden Auftrag eine saubere Anlage bereitstellen zu können.

Das beschriebene Verfahren weist eine Reihe von Vorteilen auf. Nach der Fertigstellung der Oberfläche kann der Kunde das fertige Produkt sofort in der gewünschten Menge und Qualität mitnehmen. Damit ist insbesondere das Problem geringer Stückzahlen für den Laminatpaneelhersteller gelöst, da er lediglich eine Sorte Paneele, nämlich vorgrundierte und strukturierte Paneele ggf. in unterschiedlichen Abmessungen, herstellen muss. Da die Verbindungs- und Verriegelungsmittel in diesem Verfahren an vorgrundierte Paneele angefräst oder in sonstiger Form angearbeitet werden, werden die anfallenden Fräsabfälle insbesondere dadurch reduziert, dass auf den vorgrundierten Paneelen kein Dekorpapier oder Overlaypapier aufgebracht ist. Dadurch werden die Herstellungskosten deutlich reduziert. Zudem werden durch das beschriebene Verfahren Transportschäden oder Übertragungsfehler in Bestellungen deutlich reduziert, da der Kunde direkt vor der Vorrichtung stehen kann und seine Wünsche eingibt. Eine Übertragung einer Bestellung an einen Laminathersteller ist nicht mehr notwendig.

### Bezugszeichenliste:

- 1: Holzwerkstoffplatte
- 2: Vorbehandlungseinrichtung
- 4: Grundierungseinrichtung
- 6: Trocknungseinrichtung
- 8: Kurztaktpresse
- 10: Zuschneidevorrichtung
- 12: Paneel
- 14: erste Fräseinrichtung
- 16: zweite Fräseinrichtung
- 18: Qualitätssicherung
- 20: Packstation
- 22: Kern
- 24: Grundierung
- 26: Relief
- 28: Struktur
- 102: Paneel
- 104: transportsichere Verpackung
- 106: Reinigungsvorrichtung
- 108: Beschleunigungsstrecke
- 110: Druckwerk
- 112: Druckkopf
- 114: elektronische Datenverarbeitungseinrichtung
- 116: Anzeigeeinrichtung
- 118: Scanner
- 120: Kamera
- 122: Führungselement
- 124: Beschichtungsvorrichtung
- 126: Auftragsvorrichtung 128 zweite elektronische Datenverarbeitungseinrichtung
- 130: Vorratsbehälter
- 132: erste Aushärtevorrichtung
- 134: Prägeeinrichtung
- 136: zweite Aushärtevorrichtung
- 138: Qualitätssicherung
- 140: Etikettierung

## Patentansprüche

1. Verfahren zum Herstellen verpackter grundierter Paneele als Halbzeuge mit den Schritten in dieser Reihenfolge:
a) Bereitstellen einer Holzwerkstoffplatte (1),
b) Aufbringen einer Grundierung (24) in Form einer Kunstharzschicht auf wenigstens eine Oberseite der Holzwerkstoffplatte (1),
c) Aufbringen einer Beschichtung auf eine der Oberseite der Holzwerkstoff platte (1) gegenüberliegende Unterseite der Holzwerkstoffplatte (1),
d) Verpressen des Schichtaufbaus aus Holzwerkstoffplatte (1), Grundierung (24) und Beschichtung unter Druck- und gegebenenfalls Temperatureinfluss,
e) Aufteilen der grundierten und beschichteten Holzwerkstoffplatte (1) in einzelne Paneele (12),
f) Spanabhebendes Bearbeiten von Seitenflächen der Paneele (12) zum Anarbeiten von Verbindungs- und Verriegelungsmitteln,
g) Transportsicheres Verpacken der grundierten Paneele (12).

2. Verfahren nach Anspruch 1, **dadurch gekennzeichnet, dass** die Grundierung (24) in Form eines harzgetränkten Papiers aufgebracht wird.

3. Verfahren nach Anspruch 1, **dadurch gekennzeichnet, dass** die Grundierung (24) ein direkt auf die Oberseite aufgebrachtes Kunstharz ist.

4. Verfahren nach Anspruch 1, **dadurch gekennzeichnet, dass** die Grundierung (24) in Form einer Folie auf die Oberseite der Holzwerkstoffplatte (1) aufgeklebt wird.

5. Verfahren nach einem der Ansprüche 1 bis 4, **dadurch gekennzeichnet, dass** beim Verpressen eine Struktur (28) in die Grundierung (24) eingeprägt wird.

6. Verfahren nach einem der vorstehenden Ansprüche, **dadurch gekennzeichnet, dass** nach dem spanabhebenden Bearbeiten eine Qualitätsüberprüfung (18) durchgeführt wird.

7. Verfahren nach einem der vorstehenden Ansprüche, **dadurch gekennzeichnet, dass** die Grundierung (24) eingefärbt ist.

8. Verfahren nach einem der vorstehenden Ansprüche, **dadurch gekennzeichnet, dass** auf die Grundierung (24) ein Primer aufgebracht wird.

9. Verfahren nach einem der vorstehenden Ansprüche, **dadurch gekennzeichnet, dass** die Verbindungs- und Verriegelungsmittel aus dem Paneel (12) herausgefräst werden.

10. Verfahren nach einem der vorstehenden Ansprüche, **dadurch gekennzeichnet, dass** die Paneele (12) vor dem transportsicheren Verpacken gereinigt werden, um diese für einen späteren Bedruckungsvorgang vorzubereiten.

## Claims

1. Method for the production of packaged grounded panels as semi-finished products, with the steps in this order:
a) provision of a wood material board (1),
b) application of a grounding (24) in the form of a synthetic resin layer to at least one topside of the wood material board (1),
c) application of a coating to an underside, lying opposite the topside of the wood material board (1), of the wood material board (1),
d) pressing of the layer build-up consisting of the wood material board (1), grounding (24) and coating under the influence of pressure and, if appropriate, temperature,
e) division of the grounded and coated wood material board (1) into individual panels (12),
f) cutting machining of side faces of the panels (12) for the incorporation of connection and locking means,
g) transport-safe packaging of the grounded panels (12).

2. Method according to Claim 1, **characterized in that** the grounding (24) is applied in the form of a resin-impregnated paper.

3. Method according to Claim 1, **characterized in that** the grounding (24) is a synthetic resin applied directly to the topside.

4. Method according to Claim 1, **characterized in that** the grounding (24) is glued in the form of a film to the topside of the wood material board (1).

5. Method according to one of Claims 1 to 4, **characterized in that**, during pressing, a structure (28) is embossed into the grounding (24).

6. Method according to one of the preceding claims, **characterized in that**, after cutting machining, a quality check (18) is carried out.

7. Method according to one of the preceding claims, **characterized in that** the grounding (24) is coloured.

8. Method according to one of the preceding claims, **characterized in that** a primer is applied to the grounding (24).

9. Method according to one of the preceding claims, **characterized in that** the connection and locking means are milled out of the panel (12).

10. Method according to one of the preceding claims, **characterized in that** the panels (12) are cleaned before transport-safe packaging, in order to prepare these for a subsequent printing operation.

## Revendications

1. Procédé pour fabriquer des panneaux pré-enduits emballés en tant que produit semi-fini, avec les étapes dans cet ordre :
a. préparation d'une plaque de dérivé de bois (1),
b. application d'une base (24) sous la forme d'une couche de résine synthétique sur au moins une face supérieure de la plaque de dérivé de bois (1),
c. application d'une enduction sur une face inférieure de la plaque en dérivé de bois (1) qui est opposée à la face supérieure de la plaque de dérivé de bois (1),
d. pressage de l'assemblage de plaques de dérivé de bois (1), base (24) et enduction par mise sous pression - et le cas échéant mise en température,
e. découpe dela plaque de dérivé de bois (1) avec base et enduction en panneaux individuels (12),
f. traitement d'évacuation des copeaux hors des surfaces latérales des panneaux (12) qui sont prévues pour les moyens de fixation et de verrouillage,
g. emballage de protection des panneaux pré-enduits (12) pour le transport.

2. Procédé selon la revendication 1, **caractérisé en ce que** la base (24) est appliquée sous la forme d'un papier imbibé de résine.

3. Procédé selon la revendication 1, **caractérisé en ce que** la base (24) est une résine synthétique appliquée directement sur la face supérieure.

4. Procédé selon la revendication 1, **caractérisé en ce que** la base (24) est collée sous la forme d'un film sur la face supérieure de la plaque en dérivé de bois (1).

5. Procédé selon l'une des revendications 1 à 4, **caractérisé en ce que** lors du pressage une structure (28) est estampée dans la base (24).

6. Procédé selon l'une des revendications précédentes, **caractérisé en ce qu'**un contrôle qualité (18) est pratiqué après le traitement d'évacuation des copeaux.

7. Procédé selon l'une des revendications précédentes, **caractérisé en ce que** la base (24) est teintée dans la masse.

8. Procédé selon l'une des revendications précédentes, **caractérisé en ce qu'**une sous-couche est appliquée sur la base (24).

9. Procédé selon l'une des revendications précédentes, **caractérisé en ce que** les moyens de fixation et de verrouillage sont creusés dans le panneau (12) par fraisage.

10. Procédé selon l'une des revendications précédentes, **caractérisé en ce que** les panneaux (12) sont nettoyés avant l'emballage de protection pour le transport, pour les préparer à un processus d'impression ultérieur.
